(19) Europäisches Patentamt
European Patent Office
Office européen des brevets

(11) **EP 4 488 719 A1**

(12) **EUROPEAN PATENT APPLICATION**

(43) Date of publication:
**08.01.2025 Bulletin 2025/02**

(21) Application number: **23183924.2**

(22) Date of filing: **06.07.2023**

(51) International Patent Classification (IPC):
**G01S 13/90** (2006.01)     **G01S 7/41** (2006.01)

(52) Cooperative Patent Classification (CPC):
**G01S 13/9064; G01S 7/417; G01S 13/9027**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Imec VZW**
**3001 Leuven (BE)**

(72) Inventors:
• **JAVADI, Seyed Hamed**
  **9000 Gent (BE)**
• **SAHLI, Hichem**
  **1040 Etterbeek (BE)**
• **BOURDOUX, Andre**
  **4910 Theux (BE)**

(74) Representative: **Patent Department IMEC**
**IMEC vzw**
**Patent Department**
**Kapeldreef 75**
**3001 Leuven (BE)**

(54) **A SYSTEM FOR DETERMINING POSTURE OF MOVING OBJECTS BY MEANS OF A RADAR AND A METHOD THEREFOR**

(57) The present disclosure relates to a method for determining a posture representation of a human or an animal body moving in an environment, the method comprising: obtaining, by means of an ISAR radar system, ISAR images comprising range and cross-range information characterizing the body appearance in the environment over time; extracting, from the plurality of ISAR images and by means of an image-to-image translation deep neural network, iTDNN, spatiotemporal information for respective moveable skeleton joints of the body; and combining the extracted spatiotemporal information for the respective moveable skeleton joints, thereby obtaining a posture representation of the body.

FIG.1A

EP 4 488 719 A1

**Description**

**Technical Field**

The present disclosure relates to a system and a method for tracking a moving object and determining its posture by means of a radar.

**Background**

Imaging solutions for determining the posture of moving targets or objects, such as humans, can be categorized into a device-based and a device-free solutions. In device-based solutions, several devices are attached to the person's body and the pose is estimated and tracked by accurately detecting and tracking the devices. On the other hand, no such devices are required in the device-free solutions as the person's body is observed from afar by an imaging sensor, such as a camera.

While the device-based solutions normally provide high accuracy, they impose many limitations in terms of person's movement, wearing devices, and sensors' calibration. The device-free approaches, on other hand, are more flexible but provide limited accuracy. The device-free approaches are mainly based on vision where the human poses are estimated using video frames. However, vision sensors suffer from inability to function in harsh weather as well as extreme light conditions. They also fail to see the pose depending on how the subject is dressed, or in case the subject is covered by a blanket. Moreover, the vision-based methods cannot distinguish between a human and a photo of a human. Radars, on the other hand, can work in harsh environmental conditions. They can provide high-resolution point clouds of targets. Further, radar signals can penetrate through some materials so they can potentially see through certain blockades. These advantages of radars make them a good candidate to complement or replace the vision sensors in such applications.

Conventional radar-based solutions rely either on a multiple input multiple output, MIMO, radar employing a large virtual antenna array with for example 200 or more virtual antennas, or a small-size radar having around 20 virtual antennas, in combination with deep-learning capabilities. The former radar-based solutions provide high-resolution point cloud of the objects which degrades significantly with distance. Hence, these solutions can detect the posture when a person is close enough to the radar, e.g., in the range of 2 to 3 meters. In the latter radar-based solutions, the data received by the small-size radar, i.e., the raw radar data, is feed to the deep learning network, DNN, to estimate the posture from the received radar data. Because the radar data is diluted by irrelevant information, such as clutter and multipath, these solutions require the collection of large training data set to extract informative posture features and in some scenarios may even fail to correctly determine the posture.

**Summary**

An object of embodiments of the present disclosure is to provide a radar imaging system overcoming the above limitations. More specifically, embodiments of the present disclosure aim to provide a small footprint and low complexity radar system portable to different environments and capable of providing semantic information allowing to determine the posture of moving objects such as humans and animals with a high precision even when the objects are located at further distances from the radar. Another object of embodiments of the present disclosure is to provide a small-footprint radar system enabling identification, activity recognition and behaviour analysis of such moving objects and therefor their use in various applications such as automotive, public gaming, and so on.

The scope of protection sought for various embodiments of the invention is set out by the independent claims. The embodiments and features described in this specification that do not fall within the scope of the independent claims, if any, are to be interpreted as examples useful for understanding various embodiments of the invention.

The above objects are achieved, according to a first example aspect of the present disclosure, by a method for determining a posture representation of a target such as a human or an animal body, moving in an environment as defined by claim 1. In particular, the method comprises obtaining, from a radar, reflections of a radar signal transmitted into the environment. The radar may be for example a pulsed radar or an FMCW radar which emits frequency modulated continuous wave, FMCW, signal. The radar may thus be a single-input single-output, SISO, or a multiple-input multiple-output, MIMO, radar. The radar may thus comprise at least one transmitter configured to transmit a respective radar signal into the environment and at least one receiver configured to receive the reflections of the radar signal from the environment. To this end, the received reflections will comprise reflections from the targets moving in the environment, e.g., the moving human or animal body. The method proceeds to process the obtained reflections of the radar signal or signals, received by a respective receiver by means of inverse synthetic aperture radar, ISAR, processing, to derive the range and cross-range information characterizing the body appearance in the environment, i.e., in space, over time for a respective receiver. The obtained range and cross-range information for a respective receiver can be represented as a series of two-dimensional images which are referred to as ISAR images. Each series of ISAR images thus holds information characterizing the body appearance in space at given times as observed by a respective receiver. Thus, depending on the location and the orientation of the moving body or the moving part or parts of the body at a given time with respect to the radar, an ISAR image may comprise information characterizing the appearance of the whole body or only part or parts of it. The method further proceeds to process the obtained ISAR images by means of an image-to-image translation deep neural network, iTDNN, trained to extract spatiotemporal information for respective moveable skeleton joints of the body. In the case the target is a human body, the extracted spatiotemporal information characterizes the location of the observed by the radar moveable skeleton joints, such as head, shoulders, elbows, wrists, hips, knees, and ankles joints, in space and time. The extracted spatiotemporal information may be represented in the form of so-called heat maps where each heat map represents the derived locations of a certain joint in space and time. As a single ISAR image may not hold characterization of the complete body or the complete part of the body for which the body appearance is of relevance, it is preferred that the iTDNN processes not one but several ISAR images to extract the spatiotemporal information for all moveable skeleton joints of relevance at once. In other words, the respective series of ISAR images are processed in chunks. For example, a sequence of two or four ISAR images per image series provides more useful information to the iTDNN that only one ISAR image. Once the spatiotemporal information is obtained, the method then proceeds to combine the extracted spatiotemporal information, i.e., the heat maps for the respective moveable skeleton joints, to obtain the posture representation of the body.

As the ISAR processing extracts the spatiotemporal information characterizing the moving body appearance providing the iTDNN i with useful semantic information. Any irrelevant information such as reflections from static objects, etc, is disregarded with the ISAR processing. As irrelevant information is not provided to the iTDNN false positive rate of the iTDNN is lowered drastically, while it can be trained faster and with a smaller amount of training data. Further, this allows the iTDNN to be of a low-complexity and eliminates the need of re-training or re-designing the iTDNN if the environment observed by the radar changes. For example, this may be the case when the radar is moved to a different room or space within an enclosed environment in a commercial or residential building, or, when the radar is moved from an enclosed environment to an open one, such as a park or a stadium.

Preferably, the iTDNN is configured to extract the spatiotemporal information from the ISAR images by first deriving one or more body features characterizing the moveable skeleton joints, and then by sequentially processing the one or more body features across time. By first deriving the body features and then sequentially processing the respective features over time the heat maps are created.

In that respect, the iTDNN preferably comprises a U-Net convolution neural network, U-Net CNN, which is configured to extract the one or more body features characterizing the moveable skeleton joints of the moving target in space and time. The iTDNN further comprises a convolutional Long Short-Term Memory, convLSTM, neural network configured to sequentially process the one or more body features across time and to output spatiotemporal information for the respective moveable skeleton joints. The U-Net CNN, may comprise at least three contraction layers and at least three expansion layers with a residual connection between at least one corresponding contraction and expansion layers. The contraction layers are respectively configured to perform at least one convolution operation. The convolution operation may be optionally followed by a down-sampling operation, such as a max-pooling, to sufficiently reduce the size of the features, e.g., to 8x8 pixels. The expansion layers are respectively configured to perform at least one deconvolution operation which may be optionally followed by an at least one transpose convolution operation. Further, using multiple of such contraction layers allows improving the invariance to the transformations and translations observed in the ISAR images which is essential for detection and classification applications. Furthermore, using multiple of such contraction layers effectively reduces the complexity of the U-Net CNN and the computational burden on it. The residual connection between at least one corresponding contraction and expansion layers, is preferably done at the deepest level of the U-Net CNN, i.e., between input of the last contraction layer and output of the first expansion layers. Residual connections may also be provided at higher-level layers. Preferably, residual connections are provided at the deepest level and at one level above it. Residual connections allow the features up-sampled by an expansion layer to be aggregated together with the features of a corresponding contraction layer. This way, high-resolution features available from early layers are combined with the high-level features given by deeper levels thus providing both resolution and feature information as input to the next expansion layer.

Further, the U-Net CNN may comprise a spatial drop-out layer following the last expansion layer. The spatial drop-out layer improves the generalization and avoids over training of the U-Net CNN by preventing highly correlated activations. The spatial drop-out layer preserves some features, e.g., randomly selected features, while it neglects the others. This way, the within-feature spatial correlation is preserved resulting in a better U-Net CNN performance.

Further, the method may comprise scaling the respective obtained ISAR images along their cross-range dimension. Preferably, one or more upscaling and downscaling across the cross-range dimension are performed. For example, a respective ISAR image is scaled with 2 and 1/2 scale factors, or with 2, 4, 1/2 and 1/4 scale factors, i.e., by increasing or decreasing the size of the image in the cross-range dimension. The scaled ISAR images together with the original ISAR image, i.e., its unscaled version or a version obtained with a scale factor of 1, are then used by the iTDNN to extract the spatiotemporal information for respective moveable skeleton joints of the body. By using both the unscaled and the scaled versions of the ISAR images allows to account for the rotation rate of the moving target when the latter is not available or unknown, i.e., for the lack of proper scaling of the ISAR image in the cross-range dimension.

Preferably, the combining of the spatiotemporal information is performed as follows. First, the spatiotemporal information for respective moveable skeleton joints, i.e., the heat maps, are filtered to extract the most prominent spatiotemporal regions therefrom. The filtering aims at removing insignificant or least probable pixels or neglecting the less likely regions. The filtering can be performed by means of a variance-based filtering algorithm such as Otsu or other suitable for the purpose filtering algorithms. The filtered spatiotemporal information, i.e., the filtered heat maps, are then clustered to obtain one or more distinct spatiotemporal regions therefrom. Preferably, the clustering is performed by means of a density-based clustering algorithm, such as DBSCAN or other suitable clustering algorithm. The resulting spatiotemporal information are then processed to derive a location information for the respective skeletal joint. The location information can be derived by means of a centroid extraction algorithm. Any suitable for the purpose centroid extraction algorithm, such as non-max suppression, NMS, algorithm extracting the point with the highest intensity, can be used. Preferably, location information is derived by calculating the centroid points for the respective spatiotemporal regions as the weighted average, and then selecting therefrom the centroid point with the maximum value. In other words, the image characterizing a respective moveable skeletal joint in space in time is first filtered to remove insignificant information, then clustered to identify possible distinct regions characterizing the location of the respective joint in space in time, and finally, the spatial location of the moveable skeletal joint at that point in time is identified. The above three steps - filtering, clustering, and centroid extraction - ensure that the most likely location is selected as the spatial location of a respective moveable skeletal joint at that point in time.

Further, the method may comprise deriving, from the posture representation, an action detection, activity recognition and/or behaviour analysis of the moving body. The action detection, the activity recognition and the behaviour analysis may be performed by any suitable for the purpose algorithms. The action detection may for example involve detection of an arm, or a leg being raised, while an activity recognition may for example determine if a human is jumping, walking sporadically or chaotically in a crowd, etc. In such case, a single posture representation may be sufficient for action detection, while sequence of posture representation may be needed by an activity recognition algorithm. Similarly, behaviour analysis algorithms, which aim at indicating if the human is agitated, feels threatened, if a human intends to commit a theft, etc, would also require a sequence of posture representations. Providing any of these algorithms with correct posture representation is thus crucial to their performance.

Preferably, the method is performed by a processing unit comprising at least one processor and at least one memory including computer program code, wherein the at least one memory and computer program code are configured to, with the at least one processor, to cause the processing unit to perform the method. In other words, the method may be completely realised as a computer implemented method.

According to a second example aspect a radar system is disclosed having the features of claim 12. In particular, the radar system comprises a radar having at least one transmitter configured to transmit a respective radar signal into the environment and at least one receiver configured to receive reflections of the radar signal the environment. The reflections comprise reflections from a human or an animal body moving in the environment. The radar may be for example a pulsed radar or an FMCW radar which emits frequency modulated continuous wave, FMCW, signal. The radar system further comprises at least one processing unit which is configured to derive, from the received reflections of the radar signal and by means of an inverse synthetic aperture radar, ISAR, processing, ISAR images respectively comprising range and cross-range information characterizing the body appearance in the environment over time. From the obtained ISAR images, the processing unit, extracts spatiotemporal information for respective moveable skeleton joints of the body. The extraction is performed by means of an image-to-image translation deep neural network. The processing unit then combines the extracted spatiotemporal information for the respective moveable skeleton joints to obtain therefrom a posture representation of the body.

According to a third example aspect a data processing system is disclosed having the features of claim 13. In particular, the data processing system is programmed for carrying out the method according to first example aspect.

According to a fourth example aspect a computer program product is disclosed having the features of claim 14. In particular, the computer program product comprises computer-executable instructions for causing a data processing system or a radar system to perform the method according to first example aspect.

According to a fifth example aspect a computer readable storage medium is disclosed having the features of claim 15. In particular, the computer readable storage medium comprises computer-executable instructions for performing the method according to first example aspect when the program is run on a data processing system or a radar system.

The various example embodiments of the first example aspects may be applied as example embodiments to the second, third, fourth, and fifth example aspects.

## Brief Description of the Drawings

Some example embodiments will now be described with reference to the accompanying drawings.

FIG.1A shows a block scheme of an FMCW-ISAR radar system for imaging a moving object in an environment and for obtaining therefrom its posture representation according to an example embodiment of the present disclosure;

FIG.1B shows a schematic of the coordinate system in ISAR imaging;

FIG.1C shows an example of a received radar signal in range domain;

FIG.2A shows a block schematic of a method for imaging a moving object and for determining a posture representation of the moving object according to a first example embodiment of the present disclosure;

FIG.2B shows a block schematic of a method for imaging a moving object and for determining a posture representation of the moving object according to a second example embodiment of the present disclosure;

FIG.3A shows steps for obtaining ISAR images of the moving object with the method of FIG.2A;

FIG.3B shows steps for obtaining ISAR images of the moving object according to the method of FIG.2B;

FIG.4 shows examples of radar chirps selected from the received FMCW radar frames according to an example embodiment of the present disclosure;

FIG.5 shows an image-to-image translation deep neural network, DNN, for extracting, from the obtained ISAR images, the posture representation of the moving object according to an example embodiment of the present disclosure;

FIG.6A shows examples of ISAR images of a human obtained using the FMCW radar imaging device of FIG.1A;

FIG.6B shows comparison of ISAR images of a human obtained using the method of FIG.2A and FIG.2B;

FIG.6C shows an example of spatiotemporal information for respective moveable skeletal joints of a human body and a corresponding posture representation obtained with the method of FIG.2A;

FIG.6D shows further examples of ISAR images of a walking human body and the resulting posture representation obtained with the method of FIG.2A; and

FIG.7 shows an example embodiment of a suitable computing system 700 for performing one or several steps in embodiments of the present disclosure.

## Detailed Description of Embodiment(s)

The present invention relates to an ISAR radar system and a method thereof for determining a posture representation of a moving target such as a human or an animal. The ISAR radar system may employ any stationary radar capable of sensing or imaging moving targets such as humans or animals. The ISAR radar system may therefore include any unmodulated or modulated continuous wave radar, such as an FMCW radar and pulsed radars.

The invention will be described in detail below with reference to an ISAR radar system employing an FMCW radar, however, as noted above the invention is not limited to FMCW radars only.

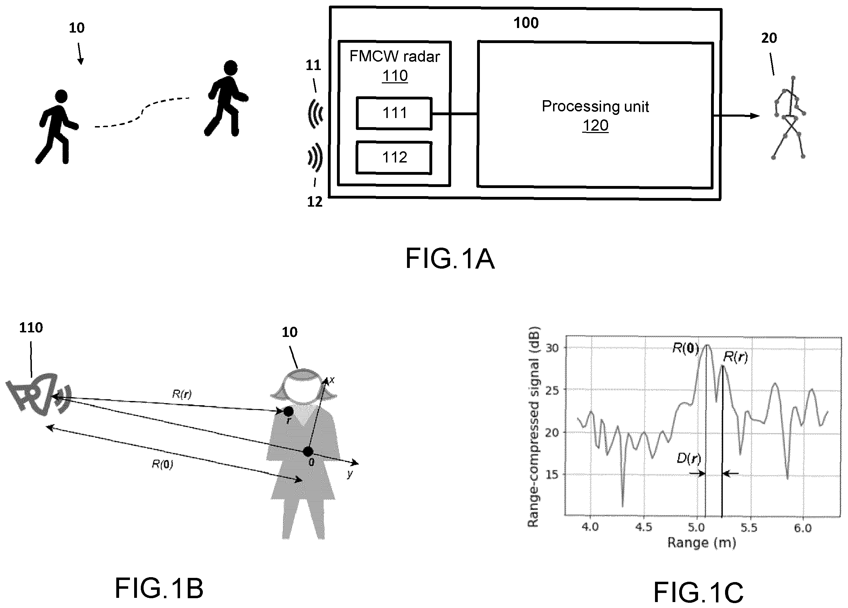

FIG.1A shows an example embodiment of the FMCW-ISAR radar system 100 according to the present disclosure. The FMCW-ISAR radar system comprises an FMCW radar 110 which is a stationary radar and a processing unit 120. Preferably, the FMCW radar and the processing unit are co-located. However, the processing unit may be separate from the FMCW radar. The FMCW radar 110 may be a single-input single-output, SISO, FMCW radar , as the FMCW radar has a transmitter with one transmit antenna and a receiver with one receive antenna. The TX transmitter 111 transmit or emit FMCW radar signal 11. The transmitted FMCW radar signal 11 travel through the environment until it reaches the reflecting objects, i.e., any static and/or moving targets within field of view of the radar. When the transmitted signal reaches the reflecting objects, it gets reflected towards the receiver. The reflected signals travel back through the environment until they reach the receiver. The RX receiver 112 thus receive reflected FMCW radar signals 12. For simplicity, only one reflecting object, i.e., a moving target which is a walking person 10, and no static objects are shown in this figure.

The received reflected FMCW radar signals are then fed to the processing unit 120 which processes them by applying an inverse synthetic aperture radar, ISAR, imaging algorithm to obtain one or more ISAR images of the moving target or targets 10. These ISAR images are further processed by the processing unit 120 to obtain a posture representation 20 of the imaged moving target 10. The processing unit 120 may further process the posture representation of the moving target by means of various algorithms suitable for deriving at least one of an action detection, activity recognition and behaviour analysis of the moving target. The FMCW-ISAR radar system 100 is thus a system capable of imaging the moving target or targets and deriving their posture representation, which enables its further augmentation for various applications.

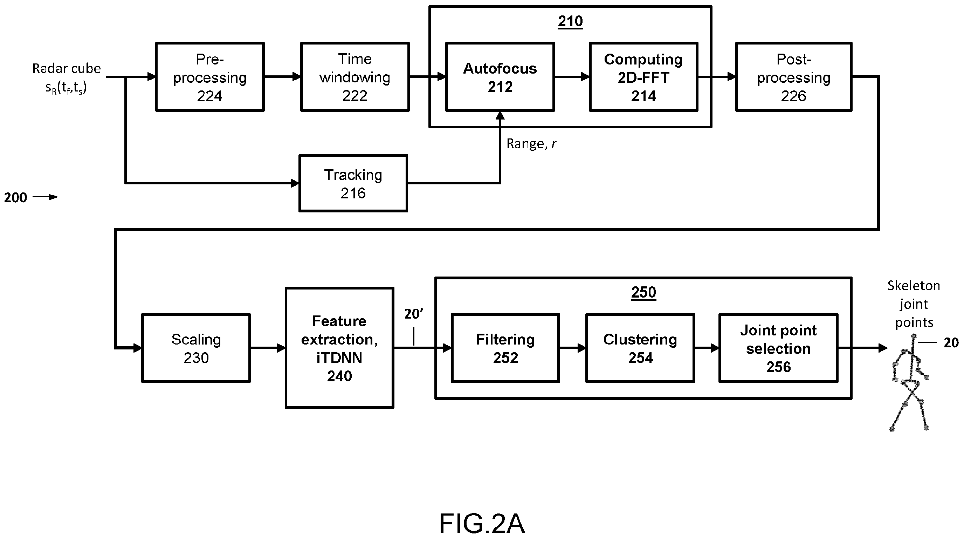

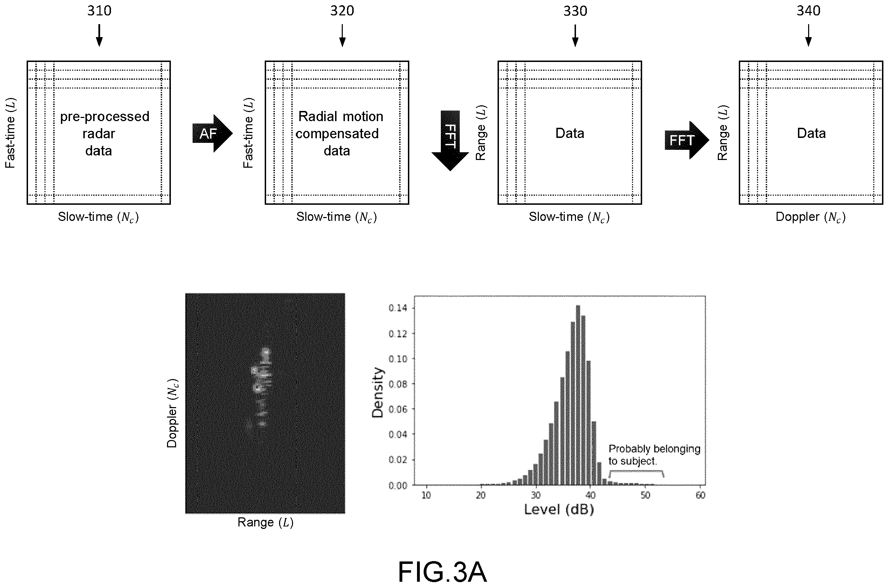

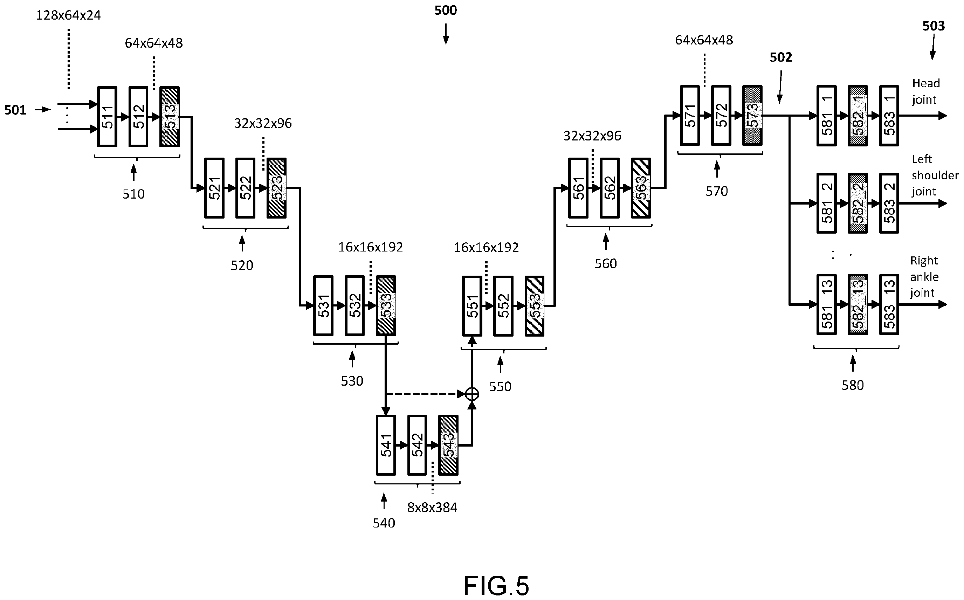

The processing of the received signals according to this example embodiment will be now described with reference to FIG.1B, FIG. 1C, FIG.2A, FIG.3A and FIG.5, wherein FIG.1B shows a schematic of the coordinate system in ISAR imaging, FIG. 1C shows an example of such received radar signal in the range domain, FIG.2A shows a block schematic of the method for imaging a moving target and for determining its posture representation and FIG.3A shows steps for obtaining ISAR images of the moving target in more detail, and, wherein FIG.5 shows an image-to-image translation deep neural network, DNN, for extracting therefrom the posture representation of the moving target according to an example embodiment of the present disclosure.

For the SISO FMCW-ISAR system 100 of FIG.1A, the FMCW signal 11 transmitted by the FMCW radar transmitter 111 comprises FMCW radar frames which duration corresponds to the duration of the so-called coherent processing interval, CPI. Each radar frame comprises $Nc$ chirps with each chirp being a continuous wave signal with frequency starting from $fc$ and linearly increasing to $fc + B$ with $B$ being the radar's bandwidth. Accordingly, the FMCW chirp signal within a radar frame can be expressed as:

$$s_{chirp}(t) = a_c \exp\left[j2\pi\left(f_c + \frac{\alpha}{2}t\right)t\right]\Pi\left(\frac{t}{T_c}\right) \qquad (1)$$

, where $a_c$ and $Tc$ respectively denote the amplitude and the period of the chirp, $\alpha$ is frequency slope of the chirp, and $\Pi\left(\frac{t}{T_c}\right)$ equals to 1 for $0 < t < Tc$ and zero elsewhere. Therefore, the radar signal 11 $s_T(t)$ within a coherent processing interval, CPI, transmitted by the transmitter 111 can be represented as:

$$s_T(t) = a_c \sum_{n=0}^{N_c-1} \exp\left[j2\pi\left(f_c + \frac{\alpha}{2}t_f\right)t_f\right]\Pi\left(\frac{t_f}{T_c}\right) \qquad (2)$$

in which $t_f \triangleq t - nT_c, n \in \{0, ..., N_c - 1\}$ is commonly referred to as the fast time.

The signal received 12 $s_R(t)$ by the receiver 112 can thus be modelled as the integration of the FMCW transmit signal reflected back from all reflecting points or scatterers on the target with round-trip time $\tau_r$, i.e.:

$$s_R(t) = \sum_{n=0}^{N_c-1} \int \sigma(r) \times \exp\left[j2\pi\left(f_c + \frac{\alpha}{2}(t_f - \tau_r)\right)(t_f - \tau_r)\right]dr \qquad (3)$$

, wherein $\sigma(r)$ denotes the target's reflectivity and the integration is computed over all scatterers of the target, i.e., $r \in$ Target, with the FMCW radar system gain and the propagation effects being included in $\sigma(r)$ for convenience. Note that for simplicity reasons in this example only one reflecting object, i.e., object 10, is considered present within the field of view of the radar system.

The signal $s_R(t)$ received by the receiver 112 is then demodulated with a copy of the transmitted signal $s_T^*(t)$ which produces the beat signal $s_B(t)$, which can be expressed as follows:

$$s_B(t) = s_T^*(t)s_R(t) = \sum_{n=0}^{N_c-1} \int \sigma(r) \exp\left[-j2\pi\tau_r\left(f_c + \alpha t_f - \frac{\alpha}{2}\tau_r\right)\right]dr \qquad (4)$$

, where $s_T^*(t)$ is the complex conjugate of $s_T(t)$. The maximum unambiguous range of the radar is given by $R_{max} = \frac{cF_s}{2\alpha}$ with $Fs$ and $c$ being the sampling rate and the light speed, respectively. This gives

$$\frac{\alpha}{2}\tau_r = \frac{cF_s}{R_{max}} \times \frac{2R(r)}{c} = \frac{R(r)}{R_{max}}F_s$$

where $R(r)$ is the range of the scatterer $r$ with respect to the radar. This implicates that term $\frac{\alpha}{2}\tau_r$ is negligible compared to $f_c$, especially since $F_s$ is in the range of at most several MHz. Therefore, the beat signal $s_B(t)$ can be approximated as:

$$s_B(t) \approx \sum_{n=0}^{N_c-1} \int \sigma(r) \exp\left[-j\frac{4\pi}{c}(f_c + \alpha t_f)R(r)\right]dr. \qquad (5)$$

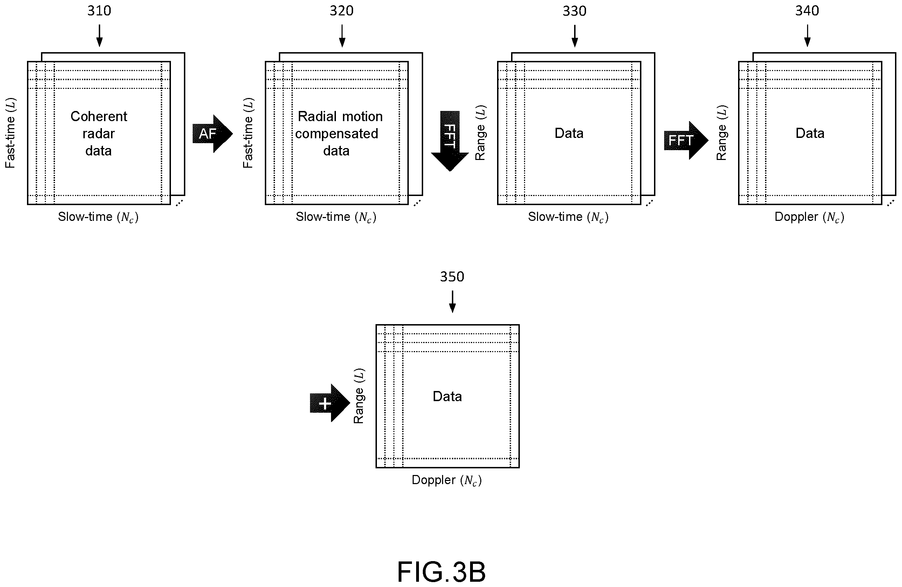

Note that the range dependency on time is not shown in Equation (5) for the sake of brevity. Further, note that this step is not shown in FIG.2A and FIG.3B for simplicity.

Equation (5) forms the basis of the ISAR imaging algorithm that will be elaborated now below.

With the ISAR imaging algorithm, the goal is to estimate the reflectivity of the moving target 10 using the signals received by the stationary FMCW radar 110. To this end, it is assumed that the moving target 10 is located within the field of view of the FMCW radar 110. Further, it is assumed a coordinate system is located on the target 10, as shown in FIG.1B. Here, $y$ indicates the range dimension which is in the direction of the radar 110 line of sight, RLOS, and $x$ denotes the cross-range dimension. The distances from the radar 110 to the coordinate origin 0 and to the scatterer $r$, i.e., a reflective point located on the moving target 10, are respectively given by $R(0)$ and $R(r)$. In other words, a moving target is seen by the FMCW-ISAR system 110 as a collection of reflective points or scatterers. Without loss of generality, it is assumed that the target 10 has an effective rotation around $z$ axis perpendicular to the $x$ - $y$ plane, with possibly variable rotational rate $\omega$. Note that the $x$ - $y$ plane always remains perpendicular to the rotation axis if it changes. In other words, axis $y$ is always in the RLOS direction, but the direction of $x$ depends on the effective rotation axis. By defining relative range $D(r) \triangleq R(r) - R(0)$ as shown in FIG.1C, in which $R(0)$ is the distance of the target coordinate origin 0 from radar, the target movement can be divided into radial or translational movements, with translational or radial movement indicated by $R(0)$ and rotational movement by $D(r)$.

The beat signal can thus be expressed as a collection of radar data 310 in the form of slow time $t_s$ and fast time $t_f$ array, i.e., as:

$$s_B(t_f, t_s) = \exp\left[-j\frac{4\pi}{c}(f_c + \alpha t_f)R_0(t_s)\right] \times$$
$$\sum_{n=0}^{N_c-1} \int \sigma(r) \exp\left[-j\frac{4\pi}{c}(f_c + \alpha t_f)D(r)\right]dr \qquad (6)$$

The radar data 310 may be represented in the form of a two-dimensional data array of size $N_c \times L$, where $N_c$ is the number of received chirps per radar frame and $L$ is the number of samples per chirp.

In Equation (6), the radial or rotational movement $R_0(t_s)$ of the target is assumed to change only in slow time. In other words, the target radial motion is assumed to be negligible during fast time. This assumption is practically applicable since the chirp duration of commercial off-the-shelf FMCW radars for the applications targeted by the present disclosure is short, e.g., less than 1ms. For example, in a radar with a range resolution less than 6cm, the radial motion of any moving target of less than 200kph can be easily neglected during each chirp.

This assumption allows to perform the ISAR imaging algorithm 210 by first compensating for the radial motion of the target observed in slow time to keep the target in a fixed range and then to perform the conversion of the radar data into a range and cross-range information while the target slightly rotates, i.e., to perform image reconstruction by converting the radar data into a series of two-dimensional images, i.e., ISAR images, characterizing the location of all reflecting points or scatterers on the moving target in the environment as observed by the radar over time.

The method performed by the processing unit 120, thus, first proceeds to perform step 212, to compensate for the radial motion. This step can also be referred to as an autofocus as the step resembles the focusing when taking pictures with a photo camera, but here the focusing is done automatically. With the radial motion compensation, a motion compensated beat signal $s_C(t_f, t_s)$ is created which can be expressed by:

$$s_C(t_f, t_s) \triangleq s_B(t_f, t_s) \exp\left[j\frac{4\pi}{c}(f_c + \alpha t_f)R_0(t_s)\right]. \qquad (7)$$

As mentioned above, the goal of the motion compensation is to keep the target range to the radar $R_0(t_s)$ during

slow time unchanged, or more accurately, to keep the changes limited to less than the size of a range bin. Using the notation of FIG.1B, $D(r)$ denoting the size of vector $r = (x,y)$ projected on RLOS, i.e., iso-range assumption, $D(r)$ can be expressed as $D((x,y),t_s) = x\ sin(\omega t_s) + y\ cos(\omega t_s)$ which can be approximated by $D((x,y),t_s) \approx x\omega t_s + y$ for sufficiently small processing times, i.e., small $t_s$, or small rotation rates $\omega$. The compensated beat signal $s_c(t_f, t_s)$ can be then given by:

$$s_C\left(t_f, t_s\right) = \sum_{n=0}^{N_c-1} \int_{x,y} \sigma(x,y)\ \exp\left[-j\frac{4\pi}{c}\left(f_c + \alpha t_f\right)(y + x\omega t_s)\right]dxdy. \qquad (8)$$

In practice, the compensation of the target's radial motion can be performed by means of either parametric or non-parametric optimization algorithms. The parametric algorithms employ a parametric motion model which is optimized using an objective function, e.g., the image contrast, or the image Entropy. On the other hand, the non-parametric algorithms, such as dominant scatterer autofocus, DSA, and phase gradient algorithm, PGA, attempt to compensate the radial motion phase by finding the dominant scatterers of the target based on which the compensation phase is estimated. Any of these methods provides substantially same result albeit with some variations in the computation complexity. Herein, the radial motion compensation is performed by means of the image-contrast-based autofocus, ICBA, algorithm as described in M. Martorella, et. al., "Contrast maximisation-based technique for 2D ISAR autofocusing," IEE Proceedings - Radar, Sonar and Navigation, vol. 152, pp. 253-262(9), August 2005 as it is a flexible algorithm in terms of computation. In simple words, in the ICBA algorithm, the motion of the coordinate origin in slow time is modelled by:

$$R_0(t_s) = r + \beta' t_s + \gamma' t_s^2 \qquad (9)$$

, where $r$ is the initial range of the origin, $\beta'$ is the radial velocity of the target, and $\gamma'$ relates to the target radial acceleration.

Therefore, as the initial range $r$ in the compensation term given by $e^{j\frac{4\pi}{c}(f_c+\alpha t_f)R_0(t_s)}$ produces no term dependent on slow time, it can be ignored in the optimization. Instead, the initial range $r$ impacts the image shifting in the range direction and therefore needs to be estimated. The estimation of the initial range $r$ is done in step 216 by means of any suitable for the purpose tracking algorithm. For example, the well-known multiple hypothesis tracking, MHT, algorithm or Gaussian mixture probability hypothesis density, GM-PHD, tracking algorithm can be employed. By replacing the slow time $t_s$ with the chirp number $n$ by $t_s = nT_c$ and by defining $\beta \triangleq \beta' T_c$ and $\gamma \triangleq \gamma' T_c$, the motion of the coordinate origin in slow time can be now expressed as:

$$R_0(n) = r + \beta\eta + \gamma\eta^2 \qquad (10)$$

Replacing $t_s$ with $n$ facilitates limiting the search space for the parameters in the ICBA algorithm which is a parametric optimization algorithm to grids in just one period equal to $\frac{c}{2(f_c+\alpha t_f)}$. The objective function, i.e., the image contrast, IC, is defined as the normalized ISAR image variance:

$$IC(I) \triangleq \sqrt{\frac{mean\left\{(I-mean(I))^2\right\}}{mean(I)}} \qquad (11)$$

, where $I$ is the image intensity. Accordingly, the autofocus parameters or the radial motion compensation parameters are derived by maximizing IC objective function of Equation (11).

To this end, the tracking step 216 is to be performed prior to the autofocusing step 212 since the initial range $r$ of moving target is required to perform correctly the autofocusing step, i.e., to keep the moving target within the same range, and therefore be also considered as forming part of the ISAR imaging algorithm 210. Considering the initial range in the autofocusing step allows to localize the moving target in the reconstructed ISAR image correctly, and in turn correct extraction of the moveable skeleton joints of the target, which is especially critical if multiple moving targets are being observed by the radar.

After the autofocusing step 212, the method proceeds to convert the motion compensated radar data into range and cross-range information, i.e., to perform the image reconstruction 214. By defining $t'_f = f_c + \alpha t_f$ as the carrier frequency corresponding to each fast time sample, and $\eta \triangleq \frac{2y}{c}$ and $v \triangleq \frac{2f_c}{c} x\omega$ , as the spatial frequencies in Equation (8) above, the resulting motion compensated FMCW radar signal can again be represented as a radar data in slow and fast times 320 and mathematically can be expressed as:

$$s_C(t'_f, t_s) = \sum_{n=0}^{N_c-1} k \int \sigma(\eta, v) \exp\left[-j2\pi(\eta t'_f + v t_s)\right] d\eta dv. \tag{12}$$

, where k is a constant due to variable change. Equation (12) makes it clear that the ISAR image of the moving target, namely its reflectivity, can be reconstructed by simply a 2D inverse Fourier transform, 2D-IFT, of the beat signal $s_B(t_f, t_s)$ once the target's radial motion has been compensated, i.e., $s_C$. Thus, the step of image reconstruction 214, merely requires applying inverse Fourier transform to the motion compensated radar data to obtain the ISAR image of the moving target.

Equations (8) and (12) thus provide the ISAR processing 210 for a SISO FMCW radar with the reconstructed image $\sigma(\eta, v)$ in time-Doppler domain which can be expressed as:

$$\sigma(\eta, v) = 2\text{D-IFT}\left[s_B(t_f, t_s) e^{j\frac{4\pi}{c}(f_c + \alpha t_f)R_0(t_s)}\right]. \tag{13}$$

, wherein $\eta = \frac{2y}{c}$ and $v = \frac{2f_c}{c} x\omega$ indicate the time and Doppler, respectively.

The reconstructed image thus comprises the range and cross-range information given in time-Doppler domain. The reconstructed image can be also transformed into spatial domain. The information in the time domain can be converted to the range dimension by $y = \frac{2\eta}{c}, [\text{m}]$ . However, transforming cross-range information from Doppler to spatial domain requires estimating the effective rotation rate $\omega$ of the moving target which is unknown. Though there are several known algorithms to estimate the rotation rate, they are computationally heavy and prone to errors. For this reason, the ISAR image converted into the range-Doppler domain is used for the extraction of the moveable skeleton joints.

As mentioned above, the radar aperture defines the cross-range resolution $\rho_a$ of the ISAR images. Specifically, $\rho_a = \frac{\lambda}{2\Delta\theta}$ with $\lambda$ being the wavelength $\Delta\theta = \omega t_a$ where $t_a$ is the aperture time. This means that an ISAR image with a finer resolution can be achieved if a longer processing time is used, i.e., by using more FMCW radar frames for the ISAR imaging algorithm. However, during this longer processing period time, the target may move to other range and/or cross-range cells or bins resulting in a blurred ISAR image. To compensate for that, a time-windowing 222 to optimize the radar aperture, e.g., in terms of image contrast, IC, may optionally be applied to the beat signal. Specifically, among the collected K radar frames, time-windowing gives the optimal set of chirps that should be used for image reconstruction:

$$N^*, n_o^* = arg \max_{N, n_o} IC\left[2\text{D-IFT}\left(s_C(t_f, t_s; N, n_o)\right)\right] \tag{13}$$

, where $n_o$ denotes the offset from the beginning of the N collected chirps, and $n_o^*$ and N* respectively denote the resulting offset and selected chirps ensuring maximum contrast in the reconstructed ISAR image. Equation (13) states that ISAR imaging algorithm 210 may be performed for example for selected values of N and $n_o$, resulting in obtaining ISAR images for the selected values. From these ISAR images, the image with the highest image contrast is then selected for the further processing.

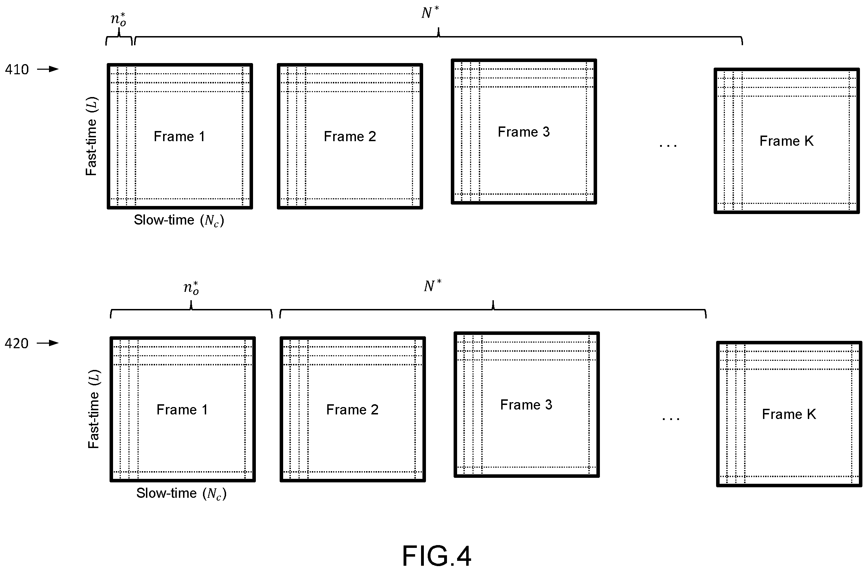

FIG.4 shows two examples resulting in maximum image contrast. In the first example, from the sequence 410 of total K FMCW radar frames, N* chirps from K radar frames are selected at an offset $n_o^*$ of three radar chirps. In the second example, from the sequence 420 of total K FMCW radar frames, N* chirps of K-2 radar frames are selected at an offset including $n_o^*$ chirps.

The number of FMCW chirps in the radar frames used by the ISAR imaging algorithm may be different from the number of chirps $N_c$ per frame in the obtained FMCW radar signal.

The combination of the time-windowing 222 and the autofocusing step 212 allows obtaining an optimally focused ISAR image of the moving target using only a single-input-single-output, SISO, FMCW radar, i.e., with one pair of a radar transmitter and a radar receiver. This is because in addition to the autofocus step, the time-windowing optimizes for the aperture size of the radar.

Furthermore, the method may optionally pre-processed 224 the beat signal to remove unwanted signals resulting from stationary targets before the optional time-windowing step 222. For example, signals resulting from static targets can be removed by subtracting the average of the chirps for a respective frame from all chirps in the frame. This is equivalent to ignoring zero-Doppler or stationary scatterers. Furthermore, in addition to stationary target removal, the pre-processing may further exploit any a priori knowledge, e.g., the waveform of the transmitted FMCW signal and/or the shape of the moving target to be imaged. The pre-processing will facilitate the detection of the moveable skeleton joints of the moving targets.

The respective resulting ISAR images are then post-processed 226 by means of an appropriate segmentation algorithm to extract the moving target so-called point cloud from the background. For this purpose, any density-based segmentation algorithm such as k-means or Otsu segmentation algorithm, may be used. However, these algorithms may not perform very well if the ISAR images exhibit a low signal-to-noise ratio, SNR, and a low image contrast. In such scenarios, a Rayleigh-based segmentation algorithm as described in Javadi et. al., "Rayleigh-based segmentation of ISAR images," Applied Optics, vol. 62, Issue 17, pp. F1-F7, 2023, which performs well in such cases is preferably used.

In the second processing stage, the ISAR images 360 are further processed to obtain the posture representation 20 of the moving target. The ISAR images 360 may be processed one by one or as in sets or chunks of consecutive ISAR images. The choice of processing depends on the application where the obtained posture representation 20 will be used. Thus, if for an application is sufficient to distinguish if a person is sitting or standing, where the position of the arms is irrelevant, then processing as few as two ISAR images may be sufficient.

In this example, it is considered that ISAR images with an image resolution of 128x64 are processed sequentially in sets of four. In a first step, i.e., step 230, the four ISAR images of the set are respectively scaled along cross-range dimension using two upscaling and two downscaling operations to obtain an image set of 128x64x5x4. The image set is then fed to an image-to-image translation deep neural network, iTDNN, for extracting features 240 characterizing the moveable skeleton joints in space and time. The iTDNN architecture will be described in detail below.

FIG.5 shows an example of a such iTDNN 500 suitable for extracting the relevant features. The iTDNN comprises a U-Net convolution neural network, U-Net CNN, configured to extract the one or more features from the image set and a convolutional Long Short-Term Memory, convLSTM, neural network configured to sequentially process the one or more features across time and to output spatiotemporal information for the respective moveable skeleton joints.

As can be seen from the figure, the U-Net CNN comprises four contraction layers, i.e., layers 510 to 540, and three expansion layers, i.e., blocks 550 to 570. Each contraction layer comprises two consecutive 3x3 convolutional operations, i.e., blocks 511-512, 521-522, 531-532, and 541-542 followed by a down-sampling operation such as a max-pooling, i.e., blocks 513, 523, 533, and 543. Similarly, each expansion layer comprises two consecutive 3x3 deconvolutional operations, i.e., 551-552, 561-562, and 571-572, followed by an up-sampling operation such as a transpose, i.e., 553, 563 and 573. The transpose operation in the last expansion layer may be substituted with or followed by a spatial drop-out layer. Compared to the standard drop-out layer, the spatial drop-out improves the performance of the iTDNN since it preserves the within-feature spatial correlation by keeping a random number of features and dropping the other features entirely. The U-Net CNN further comprises an input layer and an output layer which are however omitted in FIG.5 for simplicity reasons.

The input image set is first processed by the input layer which contracts the image set of 128x64x5x4 to 128x64x24. The resulting image set 501 is then gradually contracted from 128x64x24 size to an image set of 8x8x384 size and then gradually expanded to an image set 502 of 64x64x48 size. In the output layer the image set is expanded to the same resolution as the input image set 501, i.e., 128x64x24. The resulting image set 502 comprises one or more features characterizing the moveable skeleton joints in space and time.

By combining multiple convolutional and pooling layers, the U-Net CNN can extract more detailed information. The U-NET CNN network will learn what features are important for classification and extract these to create a compact representation of the ISAR image, i.e., characterizing the full body appearance in space and time.

The resulting image set 502 is then fed to be processed by a plurality of parallel branches 580. The respective branches generate heat maps 503 comprising information characterizing the respective moveable joints in space and time, disregarding other points of the body. The branches have the same structure and are trained jointly as detailed below. Each branch comprises a convolutional LSTM2D operation 581_1, 581_2, 581_3 which processes sequentially the extracted features over time, a spatial drop-out operation 582_1, 582_2, 582_3, which facilitates the training of the iTDNN, and end with a convolution operation 583_1, 583_2, 583_3 which gives the final heat maps for the skeleton joints. In this example, the convolutional LSTM2D operations are applied in an unrolled mode is sufficient for the sequential processing of the body changes over the time duration during which the ISAR images 501 were obtained. Further, all activations for the various operations are ReLu except for the last operation 583_1, 583_2, 583_3 where Sigmoid is preferred as it gives better convergence.

The iTDNN is trained with labelled skeletal data. The labelled skeletal data is obtained from camera-recorded images. More than 10 hours of camera recording from 10 volunteers with different ages, heights, and weights was obtained. The camera recording was carried out in outdoor environment along-side with measurements done with the FMCW-ISAR radar system 100. Data was collected from different perspectives and at different ranges from the radar system and the camera. The volunteers were asked to walk and/or stand in different poses, such as walking, walking with one hand waiving, walking with both hands up, standing on one leg and hands open, and so on. The recorded images where then processed with any conventional video-based pose estimation algorithms such as AlphaPose algorithm to obtain the labelled skeletal data, although other AI-based algorithms such as OpenPose and R-CNN may be used as well. The labelled skeletal data obtained with the AlphaPose represents the human body posture as a collection of 17 key points representing the moveable skeleton joints, as defined by the COCO dataset of Microsoft, with each labelled key point being a binary image comprising one single hot pixel representing the location of the key point in the pixel space. These key points include the eyes, the ears in addition to the other 13 moveable skeletal joints of a human. Before using this labelled data, the labelled data is pre-processed to prepare it for the training of the iTDNN 500. Firstly, the key points of the eyes and the ears were removed as they are barely observable by a radar. Secondly, the locations of the respective key points were converted from pixel space to spatial domain by considering the height of the volunteers to ensure correct conversion. In other words, the location of the hot pixel in the binary images is relocated a position corresponding to the position of the key point is spatial domain. The first step is preferrable but not necessary while the second step is required because the AlphaPose algorithm provides the key points' locations in terms of pixels within the camera-recorded image and not in spatial domain as the FMCW-ISAR radar system 100. As a result of the second step, the labelled skeletal data now contains sets of 13 binary images, one for each of the 13 moveable skeletal joints, representing the true human posture. As a last step of the preparation, the hot pixel in the binary images is replaced with a Gaussian spread. To this end, the value of

$$h_i(p) = \frac{1}{2\pi\sigma} exp\left(-\frac{\|p-j_i\|^2}{2\sigma^2}\right)$$

pixel $p$ in the label image of the ith key point can be given as , where $j_i$ denotes the location of the ith key point and $\sigma$ is the kernel parameter specifying the extend of the Gaussian spread. The Gaussian spread results in softening of the key points representation which allows simplifying the training of the iTDNN.

The obtained labelled images are then used for the training of the learning model implemented by the iTDNN 500. The learning model is trained using a loss function defined as the sum of the mean square errors, MSEs, of all the parallel

$$l(h, \hat{h}) = \sum_{i=0}^{J-1} \frac{1}{P} \sum_p \left\| h_i(p) - \hat{h}_i(p) \right\|^2$$

branches, i.e., , where $\hat{h}_i(p)$ is the value of pixel $p$ in the estimated heatmap of ith key point, $P$ is the total number of pixels, e.g. $64 \times 64 = 4096$, and $J$ is the total number of key points, i.e., $J = 13$.

Referring back to FIG.2A, in step 250, the respective heat maps 20', 503, are post-processed to extract the location information for the respective moveable skeleton. For this purpose, the respective heat maps are filtered 252 to remove any background information so that the most prominent regions in the respective heat maps are preserved. Variance-based filtering algorithms, such as Otsu algorithms, or any other suitable for the purpose filtering algorithm may be applied. The filtered heat maps are then segmented or clustered 254 with the purpose of removing any outlier regions, i.e., sparse regions or regions with low density. Any density-based segmentation algorithms, such as DBSCAN, can be used for this purpose. Finally, centroid selection or extraction 256 is applied to the respective resulting heat maps to derive one single point for a heat map, i.e., to extract a single point indicating to the location of a respective moveable joint. The centroid extraction algorithm can be as simple as taking the point with the maximum intensity in the heat map as a centroid point representing the location of the moveable joint. Alternatively, more complex algorithms may be employed, especially in cases where the resulting heat map contains several regions. In such cases, the centroid point can be selected as the point with the maximum intensity point of the region with the highest overall intensity. A preferred way could be to calculate a centroid point as weighted average for each region in the heat map and then select the centroid point with the maximum value as the location of the moveable joint. The collection of centroid points provides the posture representation 20 of the moving target.

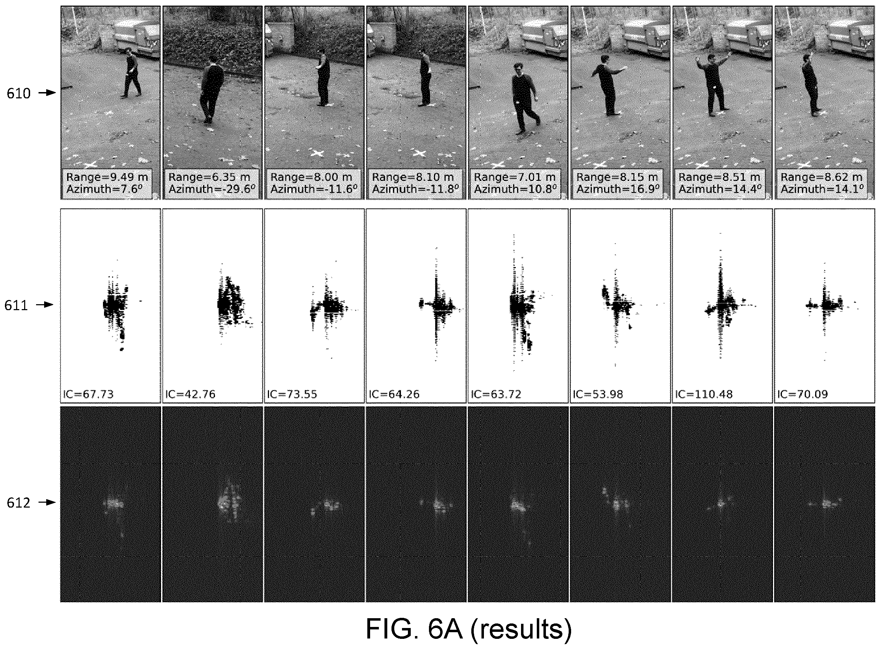

FIG.6A illustrates several examples of the magnitude of the complex-valued ISAR images 611 and the corresponding point clouds 612 of a person 10 imaged with the FMCW-ISAR radar system 100 as well as the images 610 of the person captured with a camera. As detailed above with reference to FIG. 1B above, since the ISAR images and therefore the corresponding point clouds are projections of the targets', i.e., the human, 3D point cloud on a 2D plane, the resulting images are different from how a photo camera, or a video camera images a target. The y axis of the 2D plane is always in the RLOS direction while the cross-range direction depends on the effective rotation of the target. For instance, in the 3rd and the 4th examples, the person rotates around himself which produces an effective rotation around an axis almost perpendicular to the ground. Therefore, the x-y plane becomes almost parallel to the ground resulting in ISAR images which look like a top view of the person. Similarly, in the 1st and the 5th examples, the person is walking and hence its effective rotation is almost perpendicular to its body, i.e., the torso, making the cross-range oriented in parallel to the body and hence the generated point clouds look as if they are obtained from the target's front.

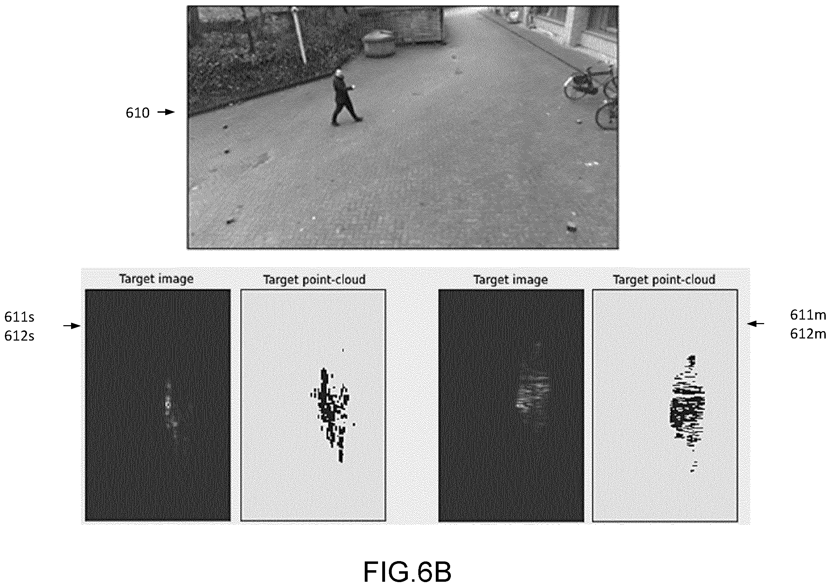

FIG.6B shows an ISAR image 611s and its corresponding point cloud 612s obtained with a SISO FMCW ISAR radar system and an ISAR image 611m and its corresponding point cloud 612m obtained with a MIMO FMCW ISAR radar system. It can be clearly seen that by incorporating phase compensation with the MIMO implementation of the FMCW ISAR radar system, the signal-to-noise ratio, SNR, of the ISAR image is significantly increased, which in turn further improves estimation of the posture representation.

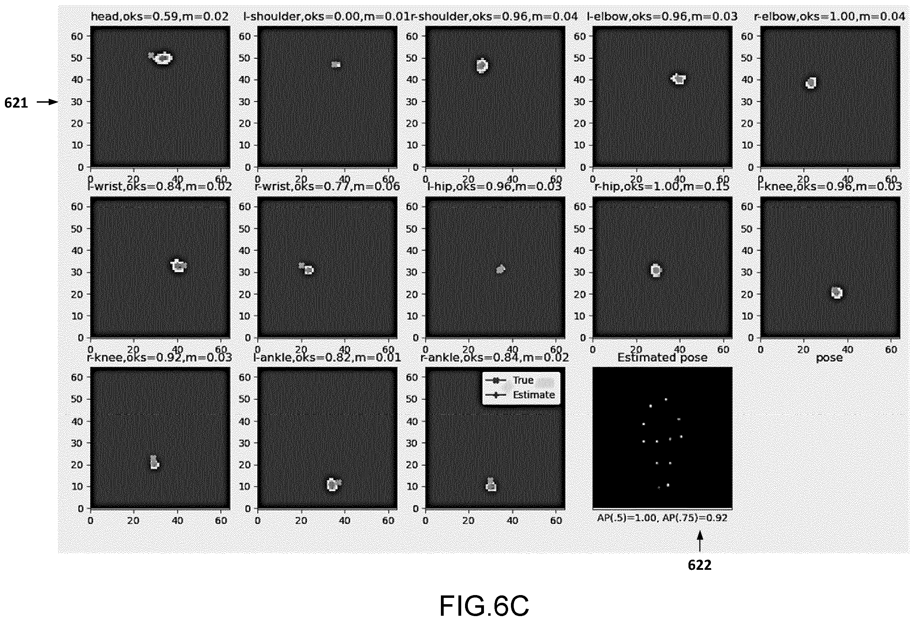

FIG.6C shows an example of the heat maps 621 obtained with the iTDNN of FIG.5 and their corresponding centroid points for respective skeleton joints, i.e., head, shoulders, elbows, wrists, hips, knees, and ankles, forming the posture representation 622.

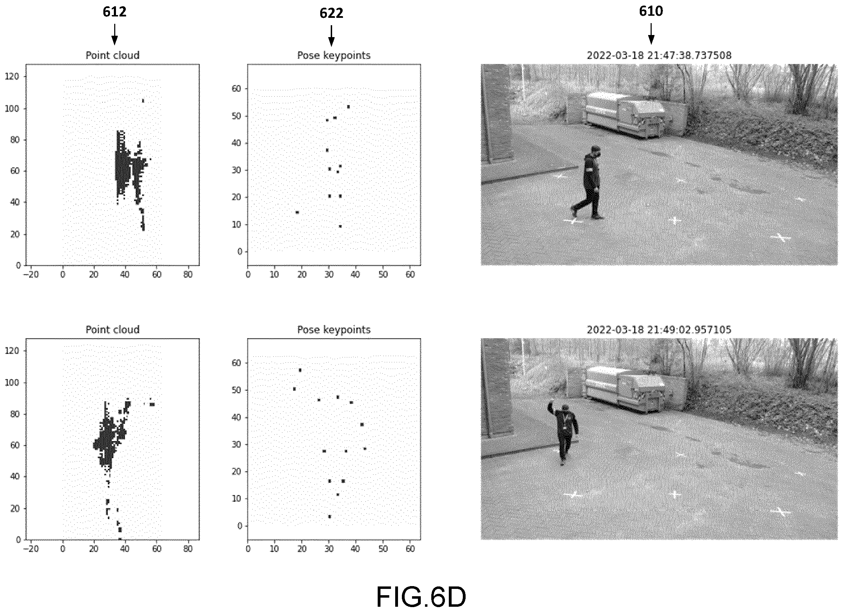

FIG.6D shows other examples of the point cloud and the resulting posture representation obtained with the FMCW-ISAR radar system of the present disclosure which correspond to the posture of the body visible on the images captured with a camera.

As the carrier frequency change is considered in the reconstruction of the ISAR images, see Equation (9) above, the obtained ISAR images therefore extended in the range dimension resulting in further improved focus and a higher signal-to-noise ratio, SNR, point-clouds. Furthermore, the coherent summation of the images reconstructed by the virtual receivers in the MIMO radar gives more informative point clouds with a higher SNRs.

As detailed above, SISO FMCW radars provide a fine range resolution but lack any angular resolution, i.e., cross-range resolution. To provide cross-range resolution, a small footprint multiple-input multiple-receivers, MIMO, FMCW radar, using $k_{TX}$ transmitters or transmit antennas and $k_{RX}$ receivers or receive antennas resulting in

$$k_{VRX} \triangleq k_{TX} \times k_{RX}$$ virtual receivers, can be used.

Herein, to provide a fine range resolution with the required angular resolution, it is proposed to use a MIMO FMCW radar 110 with a limited number of antennas, e.g., two transmit and two receive antennas, in combination with overlaying the ISAR images obtained from the respective virtual antennas. To this end, phase compensation is essential for registering the received FMCW signals prior to performing the ISAR processing. Doing so allows obtaining ISAR images for respective virtual antennas aligned in the cross-range dimension which can then be overlayed or combined together to produce an ISAR image with a fine range and the required cross-range resolution.

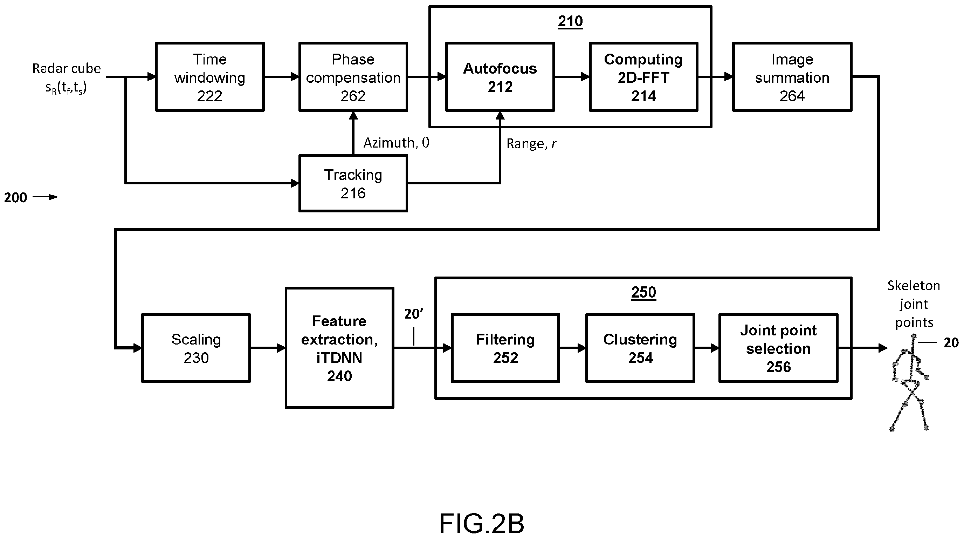

The processing of the received FMCW radar signals in the case of a MIMO FMCW-ISAR radar system will be now described with reference to FIG.2B and FIG.3B, wherein FIG.2B shows a block schematic of the method for imaging a moving target and for determining its posture representation and FIG.3B shows steps for obtaining ISAR images of the moving target in the case when a MIMO FMCW radar system is used.

In this example embodiment, it is assumed that FIG.1A now shows a MIMO FMCW radar 110 comprising multiple spatially distanced antennas having a shared field of view or coverage area. The MIMO FMCW radar may, thus, comprise $k_{TX}$ number of transmitters TX 111, and $k_{RX}$ number of receivers RX 112, with $k_{TX} \geq 2$ and $k_{RX} \geq 2$. For example, the FMCW radar may comprise 2 transmitters and 4 receivers, i.e., $k_{TX} = 2$, $k_{RX} = 4$, realising an 8-element virtual receiver antenna array, $k_{VRX}$, 3 transmitters and 4 receivers, realising a 12-element virtual receiver antenna array, $k_{VRX}$, or 4 transmitters and 4 receivers realising a 16-element $k_{VRX}$ array, i.e., $$k_{VRX} \triangleq k_{TX} \times k_{RX}$$ , with typically λ/2 distance from each other to guarantee maximum field of view of the MIMO FMCW radar . An FMCW radar with 2 transmitters and 4 receivers offers sufficient cross-range resolution for applications such as public surveillance, automotive and gaming, however any other configurations are of course possible.

Similarly to the example embodiment described above, the FMCW signals received from the respective virtual antennas are collected in a radar data in the form of slow and fast times, i.e., $s_R(t_f, t_s)$. In this case, the radar data $s_R(t_f, t_s)$ is of size $(k_{elev} \times k_{azim}) \times N \times L = k_{VRX} \times N_c \times L$, where $k_{elev}$ and $k_{azim}$ respectively denote the number of virtual receiver antennas in elevation and azimuth, and, where $N_c$ is the number of received chirps per radar frame and $L$ is the number of samples per chirp.

The radar data $s_R(t_f, t_s)$ may be optionally pre-processed 224 to remove the static clutter as described above with reference to FIG.2A above. For simplicity, the pre-processing step is not shown in FIG.2B. Next, time-windowing 222 can be optionally applied to the pre-processed radar data as detailed above with reference to FIG.2A above. In this case, however, the time-windowing optimizes the radar's aperture size based on the virtual receive antenna with the highest SNR, i.e., the FMCW radar signals from the virtual antenna or antennas ensuring the highest image contrast, IC, value in the range - cross-range map is used for the ISAR processing. As a result, only the optimal set of FMCW chirps, i.e., $s'_R(t_f, t_s)$ = $k'_{VRX} \times N \times S$, ensuring maximum contrast in the reconstructed ISAR images are maintained. Note, this step can also be performed right before applying the ISAR imaging algorithm 220.

As detailed above, prior to the ISAR processing 210, the received signals need to be phase compensated. Phase compensation 262 is to be performed as the FMCW signals reflected from the target are received in all virtual receivers $k_{VRX}$ with a different phase delay. For the $k$th virtual antenna in the case of a linear virtual antenna receiver array, phase compensation can be done by compensating the phase delay in the received signal of virtual antenna $k$, $s_R^{(k)}$ as:

$$s_{BF}^{(k)} = s_R^{(k)} \, exp\left(j\frac{2\pi f}{c} kd \sin\theta\right) \qquad (14)$$

, where $s_{BF}^{(k)}$ is the phase compensated signal, $kd \sin(\theta)$ is the phase delay with $\theta$ being the azimuth of the target or the angle of arrival, AoA, of the signal reflected from the target and $d$ being the intern-antenna distance for the kth virtual receiver antenna.

Thus, to compensate for the phase delay, the azimuth $\theta$ of the target needs to be estimated. In this example embodiment, this is done as part of the tracking step 214 which estimates the azimuth $\theta$ of the target in addition to the initial range $r$ estimation. The azimuth $\theta$ of the target can be estimated using any angle-of-arrival estimation algorithm such as the well-known MUSIC algorithm. The estimated azimuth $\theta$ is then used is step 262 to phase compensate the radar data $s'_R(t_f, t_s) = k'_{VRX} \times N_c \times L$ as expressed in Equation (14). The result is synchronized or coherent FMCW radar signals $s_R{}''(t_f, t_s) = k_{VRX}{}'' \times N_c \times L$, 310.

The coherent FMCW signals, i.e., the coherent radar data, $s_R{}''(t_f, t_s) = k_{VRX}{}'' \times N_c \times L$, is then ISAR processed in step 210 as described above with reference to FIG.2A. To convert the coherent radar data into range - cross-range map 360, first a radial motion compensation or autofocus 212 and then Fourier transform 2D-IFT 214 are performed. As further shown in FIG.3B, the autofocus 212 produces a set of radial motion compensated radar data 320 for each virtual antenna, which after the 2D-IFFT Fourier transformation in step 214 is converted into a set of ISAR images 340 in the time-Doppler domain with one ISAR image for each virtual receiver antenna.

As a last step of the first stage of the processing, the obtained set of ISAR images 340 are overlayed or combined in step 264 by for example summing them together to obtain the resulting ISAR image 350 of the moving target. After the summation step, the ISAR image can be optionally post-processed 226 as described above with reference to FIG.2A above. Again, for simplicity, this step is not shown in FIG.2B. This concludes the first stage of the processing. The processing then proceeds to the second stage where the obtained ISAR images are processed in the same way as detailed above with reference to FIG.2A and FIG.5 to derive the posture representation of the moving target.

As the carrier frequency change is considered in the reconstruction of the ISAR images, see Equation (9) above, the obtained ISAR images are extended in the range dimension resulting in further improved focus and a higher signal-to-noise ratio, SNR, point-clouds. Furthermore, the coherent summation of the images reconstructed by the virtual receivers in the MIMO radar gives more informative point clouds with a higher SNRs.

The processing unit 120 may further process the posture representation of the moving target obtained by either of the example embodiments to derive at least one of an action detection, activity recognition and behaviour analysis of the moving target. The processing may be performed by any suitable for the purpose algorithms, such as the algorithms described in S. Yan, Y. Xiong, D. Lin, "Spatial Temporal Graph Convolutional Networks for Skeleton-Based Action Recognition", AAAI, p., 2018, and, Y. Seo and Y. Choi, "Graph Convolutional Networks for Skeleton-Based Action Recognition with LSTM Using Tool-Information," Proceedings of the 36th Annual ACM Symposium on Applied Computing (SAC '21), pp. 986-993, 2021, may be employed for recognizing the performed action. The FMCW-ISAR radar system 100 is thus a system capable of imaging the moving target which enables its further augmentation for various use case scenarios.

The method according to the present disclosure can provide a high-resolution imaging and optimally focused ISAR images which in turn allows to obtain a correct posture representation of a moving body such as a human or an animal by using a SISO ISAR radar system even if the moving body is observed with the radar system from afar. Thus, the method enables the use of the proposed radar systems in various applications such as automotive, public surveillance, gaming and so on, where activity recognition, behaviour analysis, etc. are key. Further, by using a MIMO ISAR radar system in combination with beamform processing, the SNR of the imaging and therefore the accuracy of the posture representation is further improved.

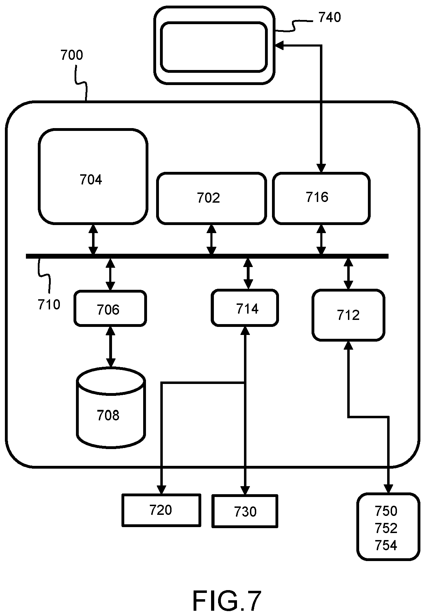

Embodiments of the method for detecting a moving target and for deriving a posture representation of the moving target as described above with reference to FIG.2A and FIG.2B above can be performed by means of a computing system programmed to perform steps of the method. In other words, the computing system is suitable for performing the various functionalities of processing unit 120 described above. The computing system can for example comprise at least one processor and at least one memory. The at least one memory stores program code which comprises computer-executable instructions which together with the at least one processor cause the computing system to perform the steps of the method. That is, the method can be entirely implemented as a computer-implemented method. An example of such computing system is shown in FIG.7. As shown in the figure, the computing system 700 may, in general, be formed as a suitable general-purpose computer and comprise a bus 710, a processor 702, a local memory 704, one or more optional input interfaces 714, one or more optional output interfaces 716, a communication interface 712, a storage element interface 706, and one or more storage elements 708. Bus 610 may comprise one or more conductors that permit communication among the components of the computing system 700. Processor 702 may include any type of conventional processor or microprocessor that interprets and executes programming instructions. Local memory 704 may include a random-access memory, RAM, or another type of dynamic storage device that stores information and instructions for execution by processor 702 and/or read-only memory, ROM, or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems, for example with other computing devices 750, 752, 754. The communication interface 712 of computing system 700 may be connected to such another computing system by means of a local area network, LAN, or a wide area network, WAN, such as for example the internet. Storage element interface 706 may comprise a storage interface such as for example a Serial Advanced Technology Attachment, SATA, interface or a Small Computer System Interface, SCSI, for connecting bus 710 to one or more storage elements 708, such as one or more local disks, for example, SATA disk drives, and control the reading and writing of data to and/or from these storage elements 708. Although the storage element(s) 708 above is/are described as a local disk, in general, any other suitable computer-readable media such as a removable magnetic disk, optical storage media such as a CD or DVD, -ROM disk, solid-state drives, flash memory cards, ... could be used. The computing system 700 could thus also correspond to a circuitry configured to implement the embodiments of the method as illustrated by FIG.2A and FIG.2B.

As used in this application, the term "circuitry" may refer to one or more or all of the following:

(a) hardware-only circuit implementations such as implementations in only analog and/or digital circuitry and
(b) combinations of hardware circuits and software, such as (as applicable):

(i) a combination of analog and/or digital hardware circuit(s) with software/firmware and

(ii) any portions of hardware processor(s) with software, including digital signal processor(s), software and memory(ies) that work together to cause an apparatus, such as a mobile phone or server, to perform various functions, and

(c) hardware circuit(s) and/or processor(s), such as microprocessor(s) or a portion of a microprocessor(s), that require software such as firmware for operation, but the software may not be present when it is not needed for operation.

This definition of circuitry applies to all uses of this term in this application, including any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example, and if applicable to a particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A method for determining a posture representation of a human or an animal body moving in an environment by means of a radar, the radar comprising at least one transmitter configured to transmit a radar signal into the environment and at least one receiver configured to receive reflections of the radar signal from the environment, the method comprising:

   - obtaining, from the radar, reflections of the radar signal, the reflections comprising reflections from human or animal body moving in the environment,
   - deriving, from the reflections of the radar signal and by means of an inverse synthetic aperture radar, ISAR, processing, ISAR images respectively comprising range and cross-range information characterizing the body appearance in the environment over time;
   - extracting, from the plurality of ISAR images and by means of an image-to-image translation deep neural network, iTDNN, spatiotemporal information for respective moveable skeleton joints of the body; and
   - combining the extracted spatiotemporal information for the respective moveable skeleton joints, thereby obtaining a posture representation of the body.

2. The method according to claim 1, wherein the step of extracting comprises:

   - deriving one or more body features characterizing the moveable skeleton joints appearance in the environment in space and time; and
   - sequentially processing the one or more body features across time, thereby obtaining spatiotemporal information for the respective moveable skeleton joints.

3. The method according to claims 1 or 2, wherein the step of combining comprises:

   - filtering the spatiotemporal information for respective moveable skeleton joints, thereby extracting most prominent spatiotemporal regions.
   - clustering the filtered spatiotemporal information for respective moveable skeleton joints, thereby obtaining one or more distinct spatiotemporal regions; and
   - deriving, therefrom, location information for the respective moveable skeleton joints by means of a centroid extraction algorithm.

4. The method according to claim 3, wherein the step of filtering is performed by means of a variance-based filtering algorithm.

5. The method according to claims 3 or 4, wherein the step of clustering is performed by means of a density-based clustering algorithm.

6. The method according to any one of claims 3 to 5, wherein the step of deriving comprises calculating a centroid point as weighted average for the respective spatiotemporal regions and selecting the centroid point with the maximum value as the location information.

7. The method according to any one of the preceding claims, wherein the method further comprises the step of scaling the respective obtained ISAR images along their cross-range dimension to obtain a plurality of scaled ISAR images; and wherein the step of extracting, further takes into account the scaled ISAR images.

8. The method according to any one of the preceding claims, wherein the method further comprises the step of deriving, from the posture representation, at least one of an action detection, activity recognition and behaviour analysis of the body.

9. The method according to any one of claims 2 to 8, wherein the image-to-image translation iTDNN comprises a U-Net convolution neural network configured to extract the one or more body features characterizing the moveable skeleton joints in space and time and a convolutional Long Short-Term Memory, convLSTM, neural network configured to sequentially process the one or more body features across time and to output spatiotemporal information for the respective moveable skeleton joints.

10. The method according to claim 9, wherein the U-Net convolution neural network comprises at least three contraction layers and at least three expansion layers with a residual connection between at least one corresponding contraction and expansion layers.

11. The method according to claim 10, wherein the U-Net convolution neural network comprises an output layer following the last expansion layer, the output layer comprises a spatial drop-out operation.

12. A radar system comprising at least one transmitter configured to transmit a respective radar signal into the environment; at least one receiver configured to receive reflections of the radar signal from the environment, the reflections comprising reflections from a human or an animal body moving in the environment, and at least one processing unit configured to perform:

- deriving, from the received reflections of the radar signal and by means of an inverse synthetic aperture radar, ISAR, processing, ISAR images respectively comprising range and cross-range information characterizing the body appearance in the environment over time;
- extracting, from the obtained ISAR images and by means of an image-to-image translation deep neural network, iTDNN, spatiotemporal information for respective moveable skeleton joints of the body; and
- combining the extracted spatiotemporal information for respective moveable skeleton joints, thereby obtaining a posture representation of the body.

13. A data processing system programmed for carrying out the method according to any one of claims 1 to 11.

14. A computer program product comprising computer-executable instructions for causing a data processing system or a radar system to perform the method according to any one of claims 1 to 10.

15. A computer readable storage medium comprising computer-executable instructions for performing the method according to any one of claims 1 to 10 when the program is run on a data processing system or a radar system.

FIG.1A

FIG.1B

FIG.1C

FIG.2A

EP 4 488 719 A1

Radar cube $s_R(t_f,t_s)$

$200 \rightarrow$

**Time windowing 222**

**Phase compensation 262**

**Tracking 216**

Azimuth, $\theta$

Range, $r$

**Autofocus 212**

**Computing 2D-FFT 214**

210

Image summation 264

Scaling 230

**Feature extraction, iTDNN 240**

20'

250

**Filtering 252**

**Clustering 254**

**Joint point selection 256**

Skeleton joint points

— 20

FIG.2B

FIG.3A

FIG.3B

FIG.4

FIG.5

FIG. 6A (results)

610 →

611s
612s →

611m
612m →

Target image   Target point-cloud   Target image   Target point-cloud

FIG.6B

FIG.6C

FIG.6D

FIG.7

## EUROPEAN SEARCH REPORT

**Application Number**

EP 23 18 3924

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/302253 A1 (SANTRA AVIK [DE] ET AL) 3 October 2019 (2019-10-03) * paragraphs [0026], [0066] – paragraph [0070]; figure 13 * | 1-15 | INV. G01S13/90 G01S7/41 |
| Y | ALNUJAIM IBRAHIM ET AL: "Synthesis of Micro-Doppler Signatures of Human Activities From Different Aspect Angles Using Generative Adversarial Networks", IEEE ACCESS, IEEE, USA, vol. 9, 23 March 2021 (2021-03-23), pages 46422-46429, XP011846907, DOI: 10.1109/ACCESS.2021.3068075 [retrieved on 2021-03-26] * the whole document * | 1-15 | |
| Y | JOSIAH SMITH: "Novel Hybrid-Learning Algorithms for Improved Millimeter-Wave Imaging Systems", ARXIV.ORG, CORNELL UNIVERSITY LIBRARY, 201 OLIN LIBRARY CORNELL UNIVERSITY ITHACA, NY 14853, 27 June 2023 (2023-06-27), XP091548724, * chap. 3, 4 * | 1-15 | **TECHNICAL FIELDS SEARCHED (IPC)** G01S |
| A | FADEL ADIB ET AL: "See through walls with WiFi!", SIGCOMM, ACM, 2 PENN PLAZA, SUITE 701 NEW YORK NY 10121-0701 USA, 27 August 2013 (2013-08-27), pages 75-86, XP058030656, DOI: 10.1145/2486001.2486039 ISBN: 978-1-4503-2056-6 * the whole document * | 1-15 | |

-/--

The present search report has been drawn up for all claims

| Place of search | Date of completion of the search | Examiner |
|---|---|---|
| Munich | 24 November 2023 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

Application Number

**EP 23 18 3924**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ADIB FADEL: "Seeing with radio Wi-Fi-like equipment can see people through walls, measure their heart rates, and gauge emotions", IEEE SPECTRUM, IEEE INC. NEW YORK, US, vol. 56, no. 6, 1 June 2019 (2019-06-01), pages 34-39, XP011727570, ISSN: 0018-9235, DOI: 10.1109/MSPEC.2019.8727144 [retrieved on 2019-05-30] * the whole document * | 1-15 | |

-----

|  | TECHNICAL FIELDS SEARCHED (IPC) |
|---|---|

The present search report has been drawn up for all claims

| Place of search | Date of completion of the search | Examiner |
|---|---|---|
| Munich | 24 November 2023 | Rudolf, Hans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 3924

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2023

| Patent document cited in search report | Publication date | Patent family member(s) | | Publication date |
|---|---|---|---|---|
| US 2019302253 A1 | 03-10-2019 | CN | 110316148 A | 11-10-2019 |
| | | EP | 3546979 A1 | 02-10-2019 |
| | | US | 2019302253 A1 | 03-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. MARTORELLA**. Contrast maximisation-based technique for 2D ISAR autofocusing,. *IEE Proceedings - Radar, Sonar and Navigation*, August 2005, vol. 152 (9), 253-262
- **JAVADI**. Rayleigh-based segmentation of ISAR images,. *Applied Optics*, 2023, vol. 62 (17), F1-F7

- **S. YAN ; Y. XIONG ; D. LIN**. Spatial Temporal Graph Convolutional Networks for Skeleton-Based Action Recognition. *AAAI*, 2018
- **Y. SEO ; Y. CHOI**. Graph Convolutional Networks for Skeleton-Based Action Recognition with LSTM Using Tool-Information,. *Proceedings of the 36th Annual ACM Symposium on Applied Computing (SAC '21)*, 2021, 986-993